# EUROPEAN PATENT APPLICATION

(11) **EP 2 520 195 A1**
(43) Date of publication of application: **07.11.2012**
(21) Application number: 11164525.5
(22) Date of filing: 03.05.2011
(51) Int. Cl.: A47B 13/12, A47F 11/10, F21V 33/00, G02B 6/00

(54) **Back-illuminated construction**

(71) Applicant: Covre Manifatture S.r.l., 22040 Alzate Brianza (CO) (IT)
(72) Inventor: Arosio, Pietro, I-22040, Alzate Brianza (CO) (IT)
(74) Representative: Cicogna, Franco

(57) **Abstract**

A back-illuminated construction (1) for making equipped walls, furniture pieces, chandeliers, glass ceiling bowls and the like, characterized in that said construction comprises a supporting framework (2) supporting a transparent panel (3) and a diffuser element (4) including a transparent material panel mounted at a distance from the transparent panel, said diffuser element including a plurality of notches (5) distributed with an increasing density starting from an edge (6) of said diffuser element therealong light sources (7) are arranged.

## Description

### BACKGROUND OF THE INVENTION

The present invention relates to a back-illuminated construction for making equipped walls, furniture pieces, chandeliers, glass ceiling bowls and the like.

Back-illuminated constructions comprising glass or plastic material panels mounted on supporting frameworks comprising light sources arranged on the rear of the panels are already known.

To provide an even light or brilliancy distribution through the overall surface of the panels, it is necessary to arrange a plurality of light sources evenly distributed through the overall rear surface of the panel.

This would involve a very complex and expensive structure construction and maintenance.

In fact, a replacement of the light sources would involve that the rear part of the panel would be fully accessible.

### SUMMARY OF THE INVENTION

Accordingly, the aim of the present invention is to provide such a back-illuminated construction for making a lot of articles, such as equipped furniture pieces and walls, shelves, glass ceiling bowls, chandeliers and the like, in which the illumination is perfectly distributed through the overall surface.

Within the scope of the above mentioned aim, a main object of the invention is to provide such a construction in which an even brilliancy distribution is achieved by using a comparatively small number of light sources.

Another object of the present invention is to provide such a back-illuminated construction which, owing to its specifically designed features, is very reliable and safe in operation.

Yet another object of the present invention is to provide such a back-illuminated construction which may be made starting from easily commercially available elements and materials and which, moreover, is very competitive from a mere economic standpoint.

According to one aspect of the present invention, the above mentioned aim and objects, as well as yet other objects, which will become more apparent hereinafter, are achieved by a back-illuminated construction for making equipped walls, furniture pieces, chandeliers, glass ceiling bowls and the like, characterized in that said construction comprises a supporting framework supporting a transparent panel and a diffuser element including a transparent material panel mounted at a distance from the transparent panel, said diffuser element including a plurality of notches distributed with an increasing density starting from an edge of said diffuser element therealong light sources are arranged.

The illuminated construction according to the present invention may be used for forming vertical walls or horizontal panels for making furniture pieces such as tables and shelvings, equipped walls, working surfaces and so on.

That same back-illuminated construction may also be so designed as to easily make glass ceiling bowls.

### BRIEF DESCRIPTION OF THE DRAWINGS

Further characteristics and advantages of the present invention will become more apparent hereinafter from the following detailed disclosure of a preferred, though not exclusive, embodiment of the invention, which is illustrated, by way of an indicative, but not limitative, example in the accompanying drawings, where:
Figure 1 is a cross-sectioned view of a portion of a back-illuminated construction according to the present invention, designed for making walls and the like;
Figure 2 is a perspective view showing an exemplary embodiment of an equipped wall, made by using the back-illuminated construction of Figure 1;
Figure 3 is a cross-sectioned view of a portion of the back-illuminated construction according to the present invention, specifically designed for making table tops and the like;
Figure 4 is a perspective view of a table made by using the back-illuminated construction of Figure 3; and
Figure 5 is a top plan view of the diffuser element constituting a main component of the back-illuminated construction according to the present invention.

### DESCRIPTION OF THE PREFERRED EMBODIMENTS

With reference to the number references of the above mentioned figures, the back-illuminated construction according to the present invention, which has been generally indicated by the reference number 1, comprises a supporting framework 2, constituted by section members, and supporting a transparent or clear panel 3, preferably made of an acid processed glass material.

The supporting framework 2 supports moreover a diffuser element 4 constituted by a transparent or clear material panel mounted at a distance from the transparent panel 3.

The diffuser element 4 comprises a plurality of notches 5 arranged according to a plurality of parallel lines which are progressively approached to one another starting from an edge 6 therealong an illuminating strip 7 is arranged.

Said illuminating strip being preferably constituted by a plurality of LEDs.

The exposed to view side of the diffuser element 4, that is the side thereof opposite to its side facing the transparent panel 2, is coated by a protective film 8.

The notches 5 of the diffuser element 4 operate as light refracting elements for refracting light diffused through the body of the diffuser element by the LEDs.

Where the notch density is greater, correspondingly greater will be the light diffusion toward the transparent panel 3.

Accordingly, by suitably distributing said notches through the surface of the diffuser element, the emitted light may be easily adjusted.

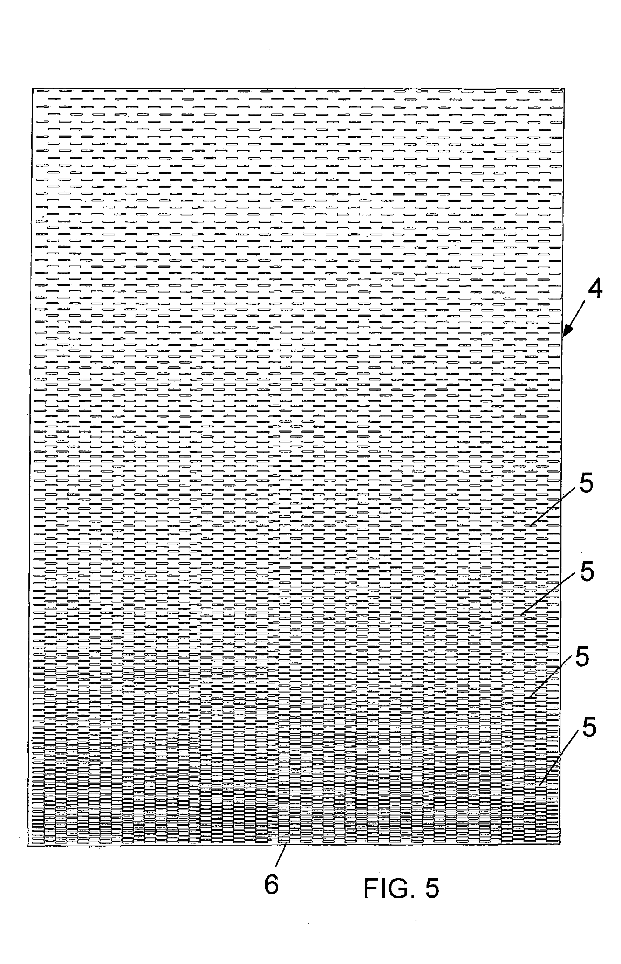

In particular, said notches 5 will be present in a less number at the region near the edge 6 where the LEDs are arranged, and their number will be progressively increased as the distance from the light sources is increased, as shown in Figure 5.

Thus, it is possible to homogeneously or evenly illuminate a surface or a wall, so as to reflect a larger light amount at the surface portions where the light transmitted through the transparent or "plexiglass" material tends to decrease because of the larger distance from the lighting source.

Thus, the diffuser element 4 will emit an even light through its overall surface, even if it is illuminated only at an edge portion thereof.

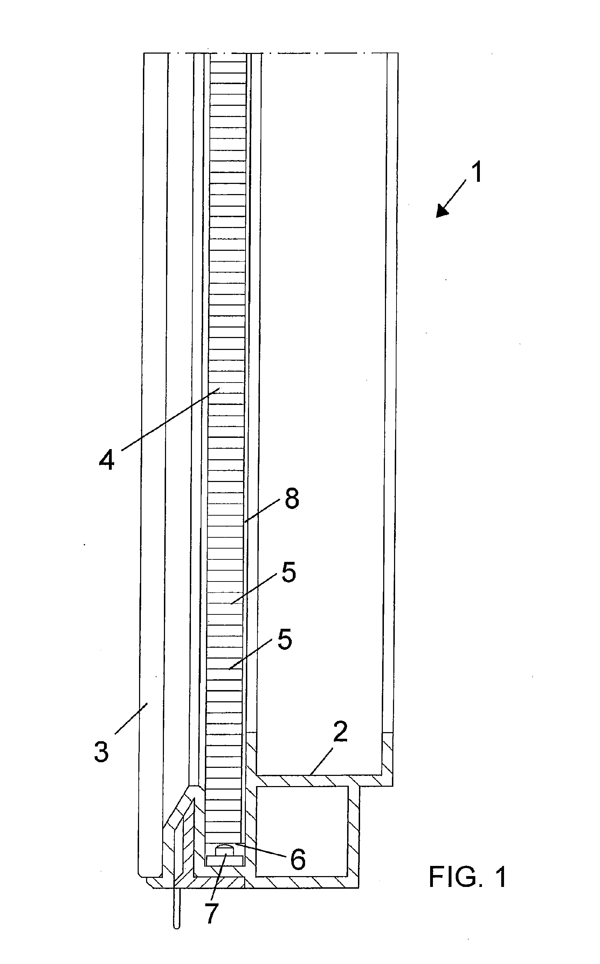

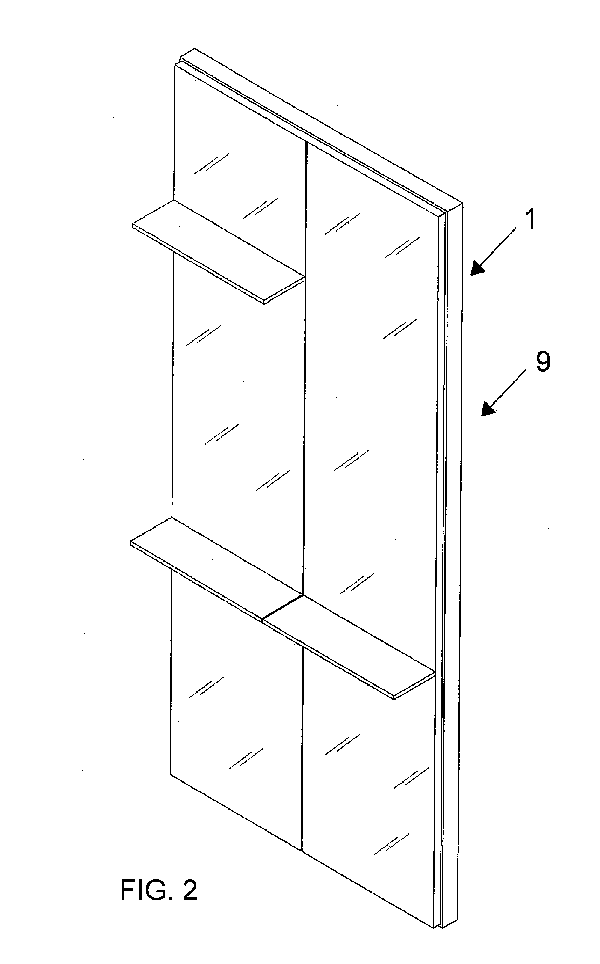

Figure 1 shows a back-illuminated construction suitable for making vertical walls, for example shelving equipped walls, as that shown in Figure 2 and generally indicated by the reference number 9.

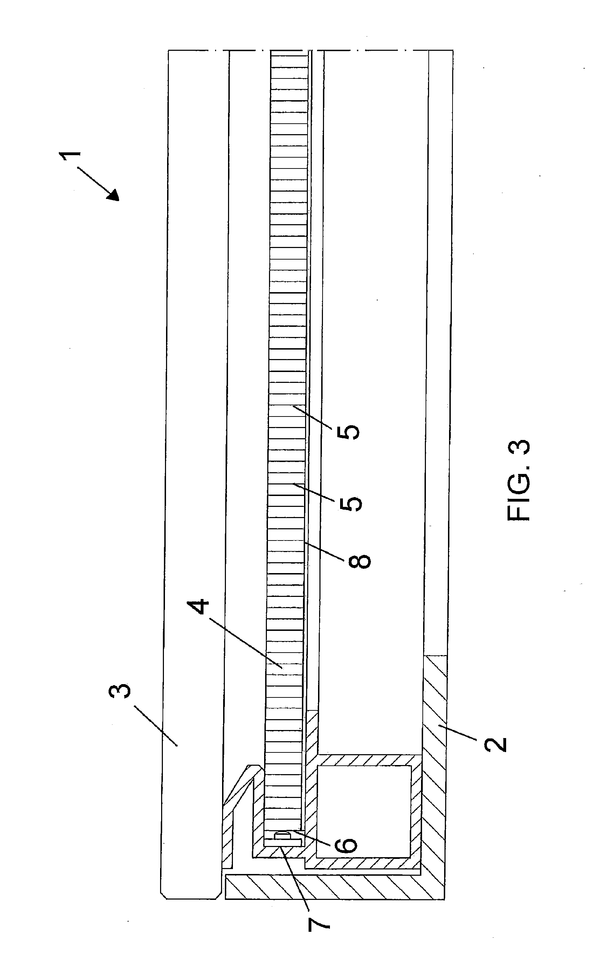

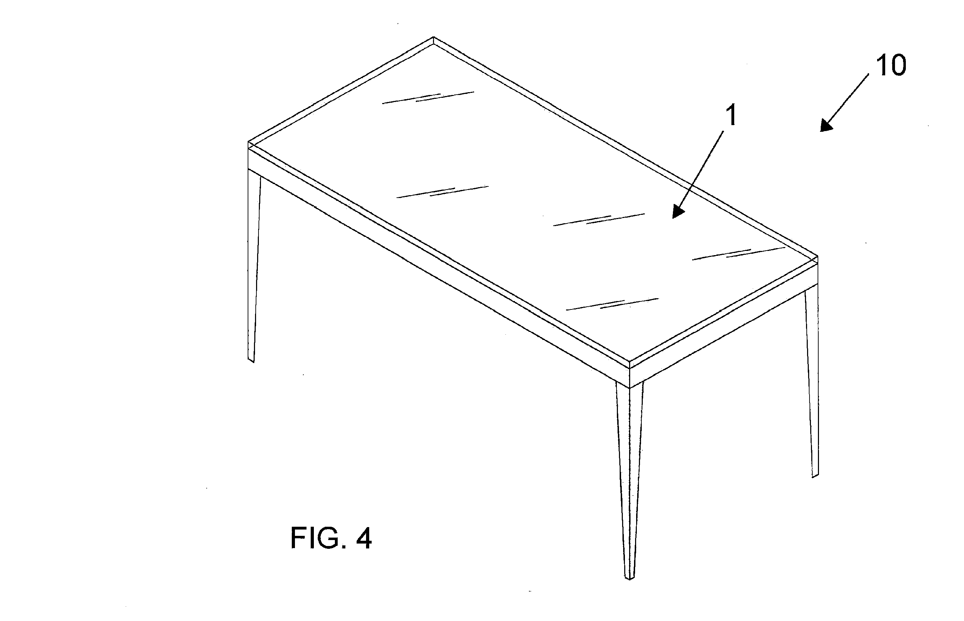

Figure 3 shows a back-illuminated construction suitable for making horizontal panels, for example for constructing tables and the like, as that shown in Figure 4 and generally indicated by the reference number 10.

It has been found that the invention fully achieves the intended aim and objects.

In fact, the invention provides a back-illuminated construction which, owing to the specifically designed structure of the diffuser element, allows to use a single illuminating or lighting element strip arranged on an edge of a panel, while assuring a perfectly evenly distributed illumination.

In practicing the invention, the used materials, as well as the contingent size and shapes, can be any, depending on requirements.

## Claims

1. A back-illuminated construction for making equipped walls, furniture pieces, chandeliers, glass ceiling bowls and the like, **characterized in that** said construction comprises a supporting framework supporting a transparent panel and a diffuser element including a transparent material panel mounted at a distance from the transparent panel, said diffuser element including a plurality of notches distributed with an increasing density starting from an edge of said diffuser element therealong light sources are arranged.

2. A back-illuminated construction, according to claim 1, **characterized in that** said light sources comprise a LED strip.

3. A back-illuminated construction, according to claim 1, **characterized in that** said notches are arranged on parallel lines which are progressively approached to one another starting from an edge therealong said LED strip is arranged.

4. A back-illuminated construction, according to claim 1, **characterized in that** said diffuser element comprises an exposed to view side, that is the side thereof opposite to the side facing the transparent panel, coated by a protective film.

5. A back-illuminated construction, according to one or more of the preceding claims, **characterized in that** said transparent panel is made of an acid processed glass material.

6. A back-illuminated construction, according to one or more of the preceding claims, **characterized in that** said diffuser element notches operate as light refracting elements for refracting light diffused through a body of said diffuser element from said light sources, the light diffused to said transparent panel being greater where the notch density is greater.

7. A vertical wall, for making equipped walls, for shelvings or the like, **characterized in that** said vertical wall comprises a back-illuminated construction according to the preceding claims.

8. A horizontal panel for making tables, working surfaces, wall-on surfaces, glass ceiling bowls, **characterized in that** said horizontal panel comprises a back-illuminated construction according to claims 1 to 7.

9. A wall or plane, according to one or more of the preceding claims, **characterized in that** said notches are arranged parallel to the LED arrangement direction.

10. A wall or plane, according to one or more of the preceding claims, **characterized in that** a distance between said notches tends to progressively decrease while moving away from the LED alignment line, thereby compensating for a decreasing of the light which progressively tends to reduce in moving away from said LEDs, so as to homogeneously illuminate said plane or wall.
